# EUROPEAN PATENT SPECIFICATION

(11) **EP 3 101 078 B1**
(45) Date of publication and mention of the grant of the patent: **19.02.2020**
(21) Application number: 15743775.7
(22) Date of filing: 27.01.2015
(51) Int. Cl.: C09J 7/24, C08L 53/00

(54) **TRANSPARENT ADHESIVE SHEET**
TRANSPARENTE HAFTFOLIE
FEUILLE ADHÉSIVE TRANSPARENTE

(30) Priority: 29.01.2014 JP 2014014104
(43) Date of publication of application: 07.12.2016
(73) Proprietor: Zeon Corporation, Tokyo 100-8246 (JP)
(72) Inventor: KOHARA Teiji, Tokyo 100-8246 (JP); ISHIGURO Atsushi, Tokyo 100-8246 (JP); SAITOU Daisuke, Tokyo 100-8246 (JP)
(74) Representative: Maiwald Patent- und Rechtsanwaltsgesellschaft mbH
(86) International application number: PCT/JP2015/052123
(87) International publication number: WO 2015/115397

(56) References cited:
- WO-A1-2012/132115
- WO-A1-2012/132115
- JP-A- 2002 105 151
- JP-A- 2003 342 542
- JP-A- 2006 283 010
- JP-A- 2011 503 342
- JP-A- 2011 523 668
- JP-A- 2013 067 737
- JP-A- 2013 227 427
- US-A1- 2011 038 045

## Description

### TECHNICAL FIELD

The present invention relates to a transparent pressure-sensitive adhesive sheet (double-sided, transparent pressure-sensitive adhesive sheet) that is used to bond two optical members (adherends), has small retardation, and exhibits excellent optical properties.

### BACKGROUND ART

A transparent pressure-sensitive adhesive sheet is used to bond various optical members used for a liquid crystal display device.

For example, when a liquid crystal display device is provided with a touch panel, a protective panel (e.g., acrylic sheet or glass sheet) that protects the display panel or the touch panel is provided through a given gap so that an external impact is not applied to the display panel or the touch panel. However, when the gap is formed by an air layer, loss of light by reflection occurs to a large extent due to the difference in refractive index between the material that forms the protective panel and the air layer, and good visibility cannot be obtained. Therefore, the gap is filled with the transparent pressure-sensitive adhesive sheet in order to improve visibility while improving the strength of the protective panel to prevent a situation in which breakage and scattering occur due to an impact.

When bonding failure and deterioration in optical properties have occurred when stacking the protective panel during the production process, the panel is normally removed and recycled.

Therefore, the transparent pressure-sensitive adhesive sheet is required to have reworkability that makes it possible to remove the pressure-sensitive adhesive sheet from a member (e.g., panel), and recycle the member. A transparent pressure-sensitive adhesive sheet having a multilayer structure in which a pressure-sensitive adhesive layer is provided on each side of a transparent film (base) may be advantageously used so that the pressure-sensitive adhesive rarely remains on the adherend (see Patent Literature 1 to 4).

A plastic material (e.g., polyester, acrylic-based resin, triacetyl cellulose, polysulfone, polyarylate, polycarbonate, and cycloolefin-based polymer) is disclosed as a material for forming the transparent film (base).

It is preferable that the transparent film (base) be optically isotropic, and have a retardation of about 10 nm or less, and more preferably 0 nm.

However, it is not necessarily easy to produce a transparent film having small retardation using a melt extrusion method that is advantageous industrially.

It is known that a hydrogenated block copolymer obtained by hydrogenating the double bonds (that are derived from an aromatic ring and a diene) of a block copolymer that comprises a polymer block comprising a repeating unit derived from an aromatic vinyl compound as the main component, and a polymer block comprising a repeating unit derived from a linear conjugated diene compound as the main component, exhibits excellent transparency, low birefringence, excellent heat resistance, low hygroscopicity, and the like, and a film obtained by extruding the hydrogenated block copolymer may be used as an optical film (e.g., polarizing film and a retardation film used for a liquid crystal display device) (see Patent Literature 5 to 7). It is effective to increase the content of the repeating unit derived from an aromatic vinyl compound in order to form a film having small retardation using a melt extrusion method. In this case, however, the resulting film is hard and fragile, and exhibits decreased mechanical strength.

Transparent double-sided adhesive sheets provided with acrylic-based pressure sensitive adhesive layers are known (Patent Literature 8).

### CITATION LIST

### PATENT LITERATURE

Patent Literature 1: JP-A-2003-342542
Patent Literature 2: JP-A-2009-185124
Patent Literature 3: JP-A-2012-193264
Patent Literature 4: JP-A-2013-227427
Patent Literature 5: JP-A-2002-105151 (US2003/207983A1)
Patent Literature 6: WO2009/067290 (US2010/290117A1)
Patent Literature 7: WO2009/137278 (US2011/038045A1)
Patent Literature 8: WO 2012/132115

### SUMMARY OF INVENTION

### TECHNICAL PROBLEM

An object of the invention is to provide a transparent pressure-sensitive adhesive sheet (double-sided, transparent pressure-sensitive adhesive sheet) that is used to bond two optical members (adherends), and exhibits excellent optical properties (transparency and low birefringence), adhesion, and reworkability.

### SOLUTION TO PROBLEM

The inventors conducted extensive studies in order to achieve the above object. As a result, the inventors found that a transparent pressure-sensitive adhesive sheet that exhibits good optical properties, good adhesion, and good reworkability can be obtained by stacking a specific polymer pressure-sensitive adhesive on each side of a sheet formed of a specific hydrogenated block copolymer to form a multilayer pressure-sensitive adhesive sheet. This finding has led to the completion of the invention.

According to one aspect of the invention, a transparent pressure-sensitive adhesive sheet comprises a film that is formed of a hydrogenated triblock copolymer [D], and a layer that is formed of a transparent pressure-sensitive adhesive [E], the layer being formed on each side of the film, the hydrogenated triblock copolymer [D] being obtained by hydrogenating 90% or more of the unsaturated bonds of a block copolymer [C] in which a polymer block [A] is bonded to each end of a polymer block [B], the polymer block [A] comprising a repeating unit derived from an aromatic vinyl compound as the main component, the polymer block [B] comprising a repeating unit derived from a linear conjugated diene compound as the main component, and the ratio (wA:wB) of the total weight fraction wA of the polymer block [A] in the block copolymer [C] to the total weight fraction wB of the polymer block [B] in the block copolymer [C] being 40:60 to 85:15, as described in claim 1.

It is preferable that the layer that is formed of the transparent pressure-sensitive adhesive [E] be formed of an acrylic-based pressure-sensitive adhesive that includes a (meth)acrylate-based polymer obtained by polymerizing a monomer component that includes an alkyl (meth)acrylate including an alkyl group having 4 to 18 carbon atoms in a ratio of 30 wt% or more.

### ADVANTAGEOUS EFFECTS OF INVENTION

One aspect of the invention thus provides a transparent pressure-sensitive adhesive sheet (double-sided, transparent pressure-sensitive adhesive sheet) that is used to bond two optical members (adherends), and exhibits excellent optical properties (transparency and low birefringence) and reworkability.

### DESCRIPTION OF EMBODIMENTS

A transparent pressure-sensitive adhesive sheet according to one embodiment of the invention comprises a film that is formed of a specific hydrogenated triblock copolymer [D], and a transparent pressure-sensitive adhesive layer that is formed on each side of the film, the hydrogenated triblock copolymer [D] being obtained by hydrogenating 90% or more of the unsaturated bonds of a block copolymer [C] that comprises at least two polymer blocks [A] and at least one polymer block [B], the polymer block [A] comprising a repeating unit derived from an aromatic vinyl compound as the main component, and the polymer block [B] comprising a repeating unit derived from a linear conjugated diene compound as the main component.

### 1. Block copolymer [C]

The block copolymer [C] used in connection with one embodiment of the invention is a polymer that serves as a precursor for producing the hydrogenated triblock copolymer [D], and includes at least two polymer blocks [A] and at least one polymer block [B].

The polymer block [A] includes a structural unit (repeating unit) derived from an aromatic vinyl compound as the main component. The content of the structural unit derived from an aromatic vinyl compound in the polymer block [A] is normally 90 wt% or more, preferably 95 wt% or more, and more preferably 99 wt% or more. When the content of the structural unit derived from an aromatic vinyl compound in the polymer block [A] is within the above range, the resulting multilayer film (transparent pressure-sensitive adhesive sheet) exhibits high heat resistance.

The polymer block [A] may include a component other than the structural unit derived from an aromatic vinyl compound. The polymer block [A] may include either or both of a structural unit derived from a linear conjugated diene compound and a structural unit derived from an additional vinyl compound as the component other than the structural unit derived from an aromatic vinyl compound. The content of the component other than the structural unit derived from an aromatic vinyl compound in the polymer block [A] is normally 10 wt% or less, preferably 5 wt% or less, and more preferably 1 wt% or less.

A plurality of polymer blocks [A] may be either identical or different as long as the above range is satisfied.

The polymer block [B] comprises a structural unit (repeating unit) derived from a linear conjugated diene compound as the main component. The content of the structural unit derived from a linear conjugated diene compound in the polymer block [B] is normally 90 wt% or more, preferably 95 wt% or more, and more preferably 99 wt% or more. When the content of the structural unit derived from a linear conjugated diene compound in the polymer block [B] is within the above range, the resulting multilayer film (transparent pressure-sensitive adhesive sheet) exhibits good flexibility.

The polymer block [B] may include a component other than the structural unit derived from a linear conjugated diene compound. The polymer block [B] may include either or both of a structural unit derived from an aromatic vinyl compound and a structural unit derived from an additional vinyl compound as the component other than the structural unit derived from a linear conjugated diene compound. The content of the component other than the structural unit derived from a linear conjugated diene compound in the polymer block [B] is normally 10 wt% or less, preferably 5 wt% or less, and more preferably 1 wt% or less. If the content of the structural unit derived from an aromatic vinyl compound in the polymer block [B] is high, the birefringence of the film decreases, but the film may exhibit low flexibility at low temperature.

When the block copolymer [C] includes a plurality of polymer blocks [B], the plurality of polymer blocks [B] may be either identical or different as long as the above range is satisfied.

Specific examples of the aromatic vinyl compound include styrene; styrenes that is substituted with an alkyl group, such as α-methylstyrene, 2-methylstyrene, 3-methylstyrene, 4-methylstyrene, 2,4-diisopropylstyrene, 2,4-dimethylstyrene, 4-t-butylstyrene, and 5-t-butyl-2-methylstyrene; styrenes that is substituted with a halogen atom, such as 4-monochlorostyrene, dichlorostyrene, and 4-monofluorostyrene; styrenes that is substituted with an aryl group, such as 4-phenylstyrene; and the like. Among these, an aromatic vinyl compound that does not include a polar group is preferable from the viewpoint of hygroscopicity, and styrene is particularly preferable from the viewpoint of industrial availability.

Specific examples of the linear conjugated diene compound include 1,3-butadiene, isoprene, 2,3-dimethyl-1,3-butadiene, 1,3-pentadiene, and the like. Among these, a linear conjugated diene compound that does not include a polar group is preferable from the viewpoint of hygroscopicity, and 1,3-butadiene and isoprene are particularly preferable from the viewpoint of industrial availability.

Examples of the additional vinyl compound include a linear vinyl compound, a cyclic vinyl compound, an unsaturated cyclic acid anhydride, an unsaturated imide compound, and the like. These vinyl compounds may be substituted with a nitrile group, an alkoxycarbonyl group, a hydroxycarbonyl group, a halogen atom, or the like. Specific examples of the vinyl compound include a linear olefin such as ethylene, propylene, 1-butene, 1-pentene, 1-hexene, 1-heptene, 1-octene, 1-nonene, 1-decene, 1-dodecene, 1-eicosene, 4-methyl-1-pentene, and 4,6-dimethyl-1-heptene; and a cycloolefin such as vinylcyclohexane; and the like. Among these, a vinyl compound that does not include a polar group is preferable from the viewpoint of hygroscopicity, a linear olefin is more preferable, and ethylene and propylene are particularly preferable.

The ratio (Mw(A1)/Mw(A2)) of the weight average molecular weight Mw(A1) of the polymer block among the polymer blocks [A] that has the highest weight average molecular weight to the weight average molecular weight Mw(A2) of the polymer block among the polymer blocks [A] that has the lowest weight average molecular weight, and the ratio (Mw(B1)/Mw(B2)) of the weight average molecular weight Mw(B1) of the polymer block among the polymer blocks [B] that has the highest weight average molecular weight to the weight average molecular weight Mw(B2) of the polymer block among the polymer blocks [B] that has the lowest weight average molecular weight, are 2.0 or less, preferably 1.5 or less, and more preferably 1.2 or less.

The block copolymer [C] may be a linear block copolymer or a radial block copolymer. It is preferable that the block copolymer [C] be a linear block copolymer since excellent mechanical strength can be obtained. It is most preferable that the block copolymer [C] be a triblock copolymer in which the polymer block [A] is bonded to each end of the polymer block [B].

The ratio (wA:wB) of the total weight fraction wA of the polymer block [A] in the block copolymer [C] to the total weight fraction wB of the polymer block [B] in the block copolymer [C] is 40:60 to 85:15, preferably 50:50 to 80:20, and more preferably 60:40 to 75:25. If the total weight fraction wA is too high, the heat resistance of the hydrogenated block copolymer [D] used in connection with one embodiment of the invention increases, and the retardation of the extruded film decreases, but the resulting film may break during reworking due to a decrease in flexibility and an increase in hardness and fragility. If the total weight fraction wA is too low, the extruded film may have too a large a retardation when used as an optical film, and may also exhibit insufficient heat resistance.

The polystyrene-equivalent weight average molecular weight (Mw) of the block copolymer [C] determined by gel permeation chromatography (GPC) (eluent: tetrahydrofuran (THF)) is normally 40,000 to 200,000, preferably 50,000 to 150,000, and more preferably 60,000 to 100,000. The molecular weight distribution (Mw/Mn) of the block copolymer [C] is preferably 3 or less, more preferably 2 or less, and particularly preferably 1.5 or less.

The block copolymer [C] may be produced using an arbitrary method. For example, the block copolymer [C] may be produced using a method that alternately polymerizes a monomer mixture (a) that includes the aromatic vinyl compound as the main component, and a monomer mixture (b) that includes the linear conjugated diene compound as the main component, through living anionic polymerization or the like; or a method that sequentially polymerizes a monomer mixture (a) that includes the aromatic vinyl compound as the main component, and a monomer mixture (b) that includes the linear conjugated diene compound as the main component, and couples the terminals of the resulting polymer block [B] using a coupling agent.

### 2. Hydrogenated triblock copolymer [D]

The hydrogenated triblock copolymer [D] used in connection with one embodiment of the invention is obtained by hydrogenating the carbon-carbon unsaturated bonds included in the main chain, the side chain, and the aromatic ring of the block copolymer [C]. The hydrogenation ratio of the hydrogenated triblock copolymer [D] is normally 90% or more, preferably 97% or more, and more preferably 99% or more. The resulting film exhibits better light resistance and heat resistance as the hydrogenation ratio increases. The hydrogenation ratio of the hydrogenated block copolymer [D] may be determined by ¹H-NMR analysis.

The unsaturated bond hydrogenation method, the reaction configuration, and the like are not particularly limited. It is preferable to use a hydrogenation method that can increase the hydrogenation ratio, and causes a polymer chain cleavage reaction to only a small extent. Examples of such a hydrogenation method include the method disclosed in WO2011/096389, the method disclosed in WO2012/043708, and the like.

The hydrogenated triblock copolymer [D] obtained as described above is collected from the reaction solution including the hydrogenated block copolymer [D] after removing either or both of a hydrogenation catalyst and a polymerization catalyst from the reaction solution. The hydrogenated triblock copolymer [D] thus collected is normally pelletized, and subjected to the subsequent film-forming process, for example.

The polystyrene-equivalent weight average molecular weight (Mw) of the hydrogenated triblock copolymer [D] determined by gel permeation chromatography (GPC) (eluent: tetrahydrofuran (THF)) is normally 40,000 to 200,000, preferably 50,000 to 150,000, and more preferably 60,000 to 100,000. The molecular weight distribution (Mw/Mn) of the hydrogenated triblock copolymer [D] is preferably 3 or less, more preferably 2 or less, and particularly preferably 1.5 or less. When the weight average molecular weight (Mw) and the molecular weight distribution (Mw/Mn) of the hydrogenated triblock copolymer [D] are within the above ranges, the heat resistance and the mechanical strength of the resulting film are maintained.

An antioxidant, a UV absorber, a light stabilizer, an anti-blocking agent, and the like may be added to the hydrogenated triblock copolymer [D] in order to improve thermal stability, light resistance, workability, and the like. These additives may be used either alone or in combination. These additives are normally used in a ratio of 10 parts by weight or less, preferably 3 parts by weight or less, and more preferably 1 part by weight or less, based on 100 parts by weight of the hydrogenated triblock copolymer [D].

### 3. Transparent pressure-sensitive adhesive [E]

The transparent pressure-sensitive adhesive sheet according to one embodiment of the invention comprises a film that is formed of the hydrogenated block copolymer [D], and a layer that is formed of a transparent pressure-sensitive adhesive [E], the layer being formed on each side of the film. When the transparent pressure-sensitive adhesive sheet is used for a liquid crystal display device that includes a touch panel, for example, a pressure-sensitive adhesive that is used to form the layer that is formed of the transparent pressure-sensitive adhesive [E] is required to have a transparency that does not impair the visibility of the display device. The transparent pressure-sensitive adhesive [E] is selected from at least one selected from the group consisting of an acrylic-based pressure-sensitive adhesive, a silicone-based pressure-sensitive adhesive, a polyester-based pressure-sensitive adhesive, a rubber-based pressure-sensitive adhesive, a polyurethane-based pressure-sensitive adhesive, an isobutylene-maleic anhydride copolymer-based pressure-sensitive adhesive. Among these, an acrylic-based pressure-sensitive adhesive is preferable from the viewpoint of transparency and low birefringence.

An acrylic-based pressure-sensitive adhesive that includes an acrylic-based polymer as the main component is preferable as the acrylic-based pressure-sensitive adhesive, the acrylic-based polymer being obtained by polymerizing a monomer component that mainly includes an alkyl (meth)acrylate including an alkyl group having 1 to 18 carbon atoms.

Examples of the alkyl (meth)acrylate include methyl (meth)acrylate, ethyl (meth)acrylate, propyl (meth)acrylate, isopropyl (meth)acrylate, butyl (meth)acrylate, isobutyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, dodecyl (meth)acrylate, stearyl (meth)acrylate, isostearyl (meth)acrylate, cyclopentyl (meth)acrylate, cyclohexyl (meth)acrylate, cyclohexylmethyl (meth)acrylate, isobornyl (meth)acrylate, cyclohexyloxyethyl (meth)acrylate, [4.3.1^{2,5}.0]tricyclodecan-3-yl (meth)acrylate, [4.3.1^{2,5}.0]tricyclodec-7-en-3-yloxyethyl (meth)acrylate, tetrahydrofurfuryl (meth)acrylate, and the like. These alkyl (meth)acrylates may be used either alone or in combination.

It is preferable to use a (meth)acrylate that includes an alkyl group having 4 to 18 carbon atoms (e.g., butyl acrylate and 2-ethylhexyl acrylate) since excellent adhesion to the film formed of the hydrogenated block copolymer [D] can be obtained. The alkyl (meth)acrylate that includes an alkyl group having 4 to 18 carbon atoms is normally used in a ratio of 30 wt% or more, preferably 40 wt% or more, and more preferably 50 wt% or more, based on the total amount of the monomer component.

A (meth)acrylate-based monomer that includes a 5 or higher-membered cyclic structure at the ester terminal (e.g., cyclohexyl acrylate, isobornyl acrylate, and tetrahydrofurfuryl acrylate) may be used in order to provide further improve adhesion to the film formed of the hydrogenated block copolymer [D]. The (meth)acrylate-based monomer that includes a 5 or higher-membered cyclic structure at the ester terminal is normally used in a ratio of 70 wt% or less, preferably 10 to 60 wt%, and more preferably 20 to 50 wt%, based on the total amount of the monomer component.

The monomer component may further include at least one functional group-containing monomer selected from a carboxyl group-containing monomer, a hydroxyl group-containing monomer, and the like (e.g., (meth)acrylic acid, 2-hydroxyethyl (meth)acrylate, and 4-hydroxybutyl acrylate). The functional group-containing monomer is normally used in a ratio of 30 wt% or less, preferably 20 wt% or less, and more preferably 10 wt% or less, based on the total amount of the monomer component.

Examples of a polymerization method used to produce the acrylic-based polymer include a solution polymerization method that effects polymerization using a radical polymerization initiator (e.g., azo-based compound or peroxide); an emulsion polymerization method; a bulk polymerization method; a polymerization method that effects polymerization by applying light or radiation in the presence of a photoinitiator; and the like.

It is preferable to use an acrylic-based polymer obtained by a radical polymerization method that utilizes a radical polymerization initiator.

A polymerization initiator that is used for common radical polymerization may be used when effecting radical polymerization. Examples of the polymerization initiator include a peroxide such as dibenzoyl peroxide and tert-butyl permaleate, an azo-based compound such as 2,2'-azobisisobutyronitrile and azobisisovaleronitrile, and the like. When effecting radical polymerization, the radical polymerization initiator is used in a ratio of about 0.005 to 1 part by weight, and preferably about 0.1 to 0.5 parts by weight, based on 100 parts by weight of the acrylic-based monomer in total.

The acrylic-based polymer obtained by polymerizing the monomer component may be used directly after drying. The acrylic-based polymer may be cross-linked using a cross-linking agent, and used in a cross-linked state. When a functional group such as a carboxyl group or a hydroxyl group has been introduced into the acrylic-based polymer, a cross-linking agent such as a polyfunctional isocyanate compound, a polyfunctional epoxy compound, or a polyfunctional melamine compound may be added to the acrylic-based polymer in order to cross-link the acrylic-based polymer.

An antioxidant, a UV absorber, a light stabilizer, and the like may be added to the acrylic-based pressure-sensitive adhesive (that includes the acrylic-based polymer and is used to form the layer that is formed of the transparent pressure-sensitive adhesive [E]) in order to improve thermal stability, light resistance, and the like. These additives may be used either alone or in combination. These additives are normally used in a ratio of 10 parts by weight or less, preferably 3 parts by weight or less, and more preferably 1 part by weight or less, based on 100 parts by weight of the acrylic-based polymer.

The layer that is formed of the transparent pressure-sensitive adhesive [E] that is used in connection with one embodiment of the invention exhibits adhesion to various optical members, and releasability (reworkability) from various optical members. With regard to adhesion to various optical members, the layer that is formed of the transparent pressure-sensitive adhesive [E] normally has a 180° peel strength (tensile rate: 300 mm/min, 23°C) with respect to a polyethylene terephthalate film (hereinafter referred to as "PET film"), a triacetyl cellulose film (hereinafter referred to as "TAC film"), and the like, of 1 to 10 N/cm, preferably 2 to 8 N/cm, and more preferably 3 to 6 N/cm.

### 4. Transparent pressure-sensitive adhesive sheet

The transparent pressure-sensitive adhesive sheet according to one embodiment of the invention has a configuration in which the layer that is formed of the transparent pressure-sensitive adhesive [E] is formed on each side of the film that is formed of the hydrogenated triblock copolymer [D]. According to this configuration, when a touch panel is bonded to the screen of a display device through the transparent pressure-sensitive adhesive sheet, for example, the transparent pressure-sensitive adhesive sheet can be removed from the touch panel and the screen of the display device. This makes it possible to recycle the touch panel and the display device.

The film that is formed of the hydrogenated triblock copolymer [D] maintains the tensile strength of the transparent pressure-sensitive adhesive sheet. For example, when the transparent pressure-sensitive adhesive sheet is removed from the surface of a touch panel or a display device, the film that is formed of the hydrogenated triblock copolymer [D] prevents a situation in which the layer that is formed of the transparent pressure-sensitive adhesive [E] breaks and remains on the surface of the touch panel or the display device. When the transparent pressure-sensitive adhesive sheet is used for a liquid crystal display device, it is desirable that the film that is formed of the hydrogenated triblock copolymer [D] be transparent and have small retardation. The in-plane retardation (Re) of the film that is formed of the hydrogenated triblock copolymer [D] is normally 10 nm or less, preferably 3 nm or less, and more preferably 1 nm or less.

The thickness of the film that is formed of the hydrogenated triblock copolymer [D] is normally 5 to 100 µm, preferably 10 to 50 µm, and more preferably 15 to 30 µm. When the thickness of the film that is formed of the hydrogenated triblock copolymer [D] is within the above range, it is possible to reduce or suppress a situation in which the transparent pressure-sensitive adhesive sheet breaks when the transparent pressure-sensitive adhesive sheet is removed from the adherend, while reducing the thickness of the entire transparent pressure-sensitive adhesive sheet.

The layer that is formed of the transparent pressure-sensitive adhesive [E] is a pressure-sensitive adhesive layer that fills a gap between a touch panel and a protective cover, or a gap between a touch panel and a display device, for example. The thickness of the layer that is formed of the transparent pressure-sensitive adhesive [E] is normally 5 to 100 µm, preferably 10 to 50 µm, and more preferably 15 to 30 µm. When the thickness of the layer that is formed of the transparent pressure-sensitive adhesive [E] is within the above range, it is possible to prevent a situation in which a gap remains between the transparent pressure-sensitive adhesive sheet and the adherend.

The film that is formed of the hydrogenated triblock copolymer [D] that is used in connection with one embodiment of the invention may be produced using an arbitrary method. The film that is formed of the hydrogenated triblock copolymer [D] may be produced using a known melt extrusion method or the like. The film-forming conditions are appropriately selected taking account of the forming method. For example, when using a melt extrusion method, the resin temperature is normally selected within the range from 180 to 260°C, preferably 190 to 250°C, and more preferably 200 to 240°C. If the resin temperature is too low, deterioration in fluidity may occur, and the in-plane retardation (Re) of the resulting film may increase to a large extent, or the surface smoothness-flatness of the resulting film may deteriorate. Moreover, since it may be difficult to increase the extrusion speed, industrial productivity may be impaired. If the resin temperature is too high, the in-plane retardation (Re) of the resulting film can be reduced, but the hydrogenated triblock copolymer [D] may exhibit poor thermal stability, and the mechanical strength of the resulting film may deteriorate.

It is preferable to melt the hydrogenated triblock copolymer [D] in an extruder, and pass the molten resin through a gear pump or a filter before extruding the molten resin from a die provided to the extruder. A uniform amount of resin can be extruded, and a variation in thickness can be reduced by utilizing a gear pump. Foreign matter can be removed from the resin by utilizing a filter, and a transparent film that has no defects, has an excellent external appearance, and is suitable for optical applications can be obtained.

The transparent pressure-sensitive adhesive sheet according to one embodiment of the invention may be produced using an arbitrary method. For example, the transparent pressure-sensitive adhesive sheet according to one embodiment of the invention may be produced using a method that applies a solution including the pressure-sensitive adhesive [E] to the film that is formed of the hydrogenated triblock copolymer [D], and dries the applied solution to remove the solvent; a method that applies a solution including the pressure-sensitive adhesive [E] to a PET film (release film), dries the applied solution to remove the solvent, and bonds the resulting laminate to the film that is formed of the hydrogenated triblock copolymer [D] using a heat lamination method; or the like.

The solution including the pressure-sensitive adhesive [E] may be applied to the base film using a known coater (e.g., gravure roll coater, reverse roll coater, kiss roll coater, dip roll coater, bar coater, knife coater, or spray coater), for example. An identical transparent pressure-sensitive adhesive [E] may be applied to each side of the film that is formed of the hydrogenated triblock copolymer [D], or a different transparent pressure-sensitive adhesive [E] may be applied to each side of the film that is formed of the hydrogenated triblock copolymer [D]. When a layer is formed on each side of the film that is formed of the hydrogenated triblock copolymer [D] using a different pressure-sensitive adhesive [E], each side of the transparent pressure-sensitive adhesive sheet exhibits a different degree of releasability from the adherend. When the pressure-sensitive adhesive [E] is applied to the base film in the form of a solution, the layer that is formed of the pressure-sensitive adhesive [E] has an in-plane retardation (Re) of approximately 0.

The transparent pressure-sensitive adhesive sheet according to one embodiment of the invention has a configuration in which the layer that is formed of the transparent pressure-sensitive adhesive [E] is formed on each side of the film that is formed of the hydrogenated triblock copolymer [D]. The transparent pressure-sensitive adhesive sheet according to one embodiment of the invention may be stored in a state in which a releasable PET film, polyolefin film, or the like is bonded to one side or each side of the transparent pressure-sensitive adhesive sheet, for example.

The transparent pressure-sensitive adhesive sheet according to one embodiment of the invention may be used to bond a touch panel and a display device, bond a touch panel and a transparent cover, bond glass sheets to form a glass laminate, bond thin glass sheets, bond a thin glass sheet to a liquid crystal display device, or bond a thin glass sheet to a transparent resin substrate of an illumination apparatus, for example.

### EXAMPLES

The present disclosure is further described below by way of examples. Note that the units "parts" and "%" respectively refer to "parts by weight" and "wt%" unless otherwise indicated.

The measurement methods and the evaluation methods used in connection with the examples are described below.

### (1) Weight average molecular weight (Mw) and molecular weight distribution (Mw/Mn)

The molecular weight (standard polystyrene-equivalent value) of the block copolymer and the hydrogenated block copolymer was measured at 38°C by gel permeation chromatography (GPC) using tetrahydrofuran as an eluent. The molecular weight was measured using a system "HLC-8020 GPC" manufactured by Tosoh Corporation.

### (2) Hydrogenation ratio

The hydrogenation ratio of the main chain, the side chain, and the aromatic ring of the hydrogenated block copolymer [D] was calculated from the ¹H-NMR spectrum.

### (3) Transparency of transparent pressure-sensitive adhesive sheet

The transparent pressure-sensitive adhesive sheet was placed between two white glass sheets (sheet glass) having a thickness of 0.7 mm, a length of 50 mm, and a width of 50 mm. After performing vacuum deaeration at 50°C for 5 minutes using a vacuum laminator, the laminate was pressed for 10 minutes under vacuum to prepare a specimen (that was disposed between the white glass sheets). The light transmittance of the specimen at a wavelength of 470 nm, 550 nm, and 650 nm was measured using a UV spectrophotometer ("V-570" manufactured by JASCO Corporation).

### (4) In-plane retardation (Re) of transparent pressure-sensitive adhesive sheet

The transparent pressure-sensitive adhesive sheet was placed between two white glass sheets (sheet glass) having a thickness of 0.5 mm, a length of 100 mm, and a width of 100 mm. After performing vacuum deaeration using a vacuum laminator, the laminate was transferred to an autoclave, and heated at 50°C for 20 minutes under a pressure of 0.9 MPa to prepare a specimen (that was disposed between the white glass sheets). The in-plane retardation (Re) of the specimen at a wavelength of 550 nm was measured using an automatic birefringence meter ("KOBLA-21ADH" manufactured by Oji Scientific Instruments Co., Ltd.), and the difference between the in-plane retardation (Re) of the specimen and the in-plane retardation (Re) of the white glass sheet measured separately was taken as the in-plane retardation (Re) of the transparent pressure-sensitive adhesive sheet.

### (5) Adhesion of transparent pressure-sensitive adhesive sheet

The transparent pressure-sensitive adhesive sheet was placed on a PET film ("LUMIRROR (registered trademark) S10" manufactured by Toray Industries Inc., thickness: 100 µm), and the laminate was transferred to an autoclave, and heated at 50°C for 10 minutes under a pressure of 0.9 MPa to bond the transparent pressure-sensitive adhesive sheet to the PET film. The laminate was removed from the autoclave, allowed to stand at room temperature (25°C) for 120 minutes, and cut to have a width of 20 mm and a length of 100 mm to prepare a peel test specimen. The transparent pressure-sensitive adhesive sheet was removed from the PET film at a tensile rate of 300 mm/min using an autograph ("AGS-10KNX" manufactured by Shimadzu Corporation) to measure the 180° peel strength of the specimen. A case where the peel strength was 3 to 6 N/cm was evaluated as "Good", a case where the peel strength was 1 N/cm or more and less than 3 N/cm or more than 6 N/cm and 10 N/cm or less was evaluated as "Fair", and a case where the peel strength was less than 1 N/cm or more than 10 N/cm was evaluated as "Bad". A case where the film formed of the hydrogenated block copolymer [D] included in the transparent pressure-sensitive adhesive sheet broke, and the transparent pressure-sensitive adhesive sheet could not be removed, was also evaluated as "Bad". (6) Reworkability of transparent pressure-sensitive adhesive sheet

A PET film (length: 125 mm, width: 125 mm, thickness: 0.1 mm) on which an ITO film was deposited on one side, was provided, and the ITO film formed on the PET film was placed on a polarizing film (purchased from Tech Jam Co., Ltd., length: 12.5 cm, width: 12.5 cm, thickness: 0.2 mm) (in which a triacetyl cellulose (TAC) protective film was formed on the surface) through the transparent pressure-sensitive adhesive sheet. The laminate was transferred to an autoclave, and heated at 50°C for 10 minutes under a pressure of 0.9 MPa to bond the PET film to the polarizing film. The laminate was removed from the autoclave, and allowed to stand at room temperature (25°C) for 120 minutes, and the polarizing film and the ITO-deposited PET film were removed from the transparent pressure-sensitive adhesive sheet. The surface of the polarizing film, the surface of the ITO-deposited PET film, and the surface of the transparent pressure-sensitive adhesive sheet were observed with the naked eye. A case where the pressure-sensitive adhesive [E] did not remain on the surface of the polarizing film and the surface of the ITO-deposited PET film was evaluated as "Good", and a case where the pressure-sensitive adhesive [E] remained on either or both of the surface of the polarizing film and the surface of the ITO-deposited PET film was evaluated as "Bad".

### Reference Example 1

### Hydrogenated block copolymer [D1]

### Production of block copolymer [C1]

A reactor equipped with a stirrer in which the internal atmosphere had been sufficiently replaced with nitrogen, was charged with 550 parts of dehydrated cyclohexane, 35.0 parts of dehydrated styrene, and 0.475 parts of n-dibutyl ether. 0.70 parts of a 15 wt% solution of n-butyllithium in cyclohexane was added to the mixture while stirring the mixture at 60°C to initiate a polymerization reaction. The mixture was reacted at 60°C for 60 minutes with stirring. The polymerization conversion rate determined by gas chromatography was 99.5%.

After the addition of 30.0 parts of dehydrated isoprene to the reaction mixture, the resulting mixture was stirred for 30 minutes. The polymerization conversion ratio was 99.5%.

After the addition of 35.0 parts of dehydrated styrene, the mixture was stirred for 60 minutes. The polymerization conversion rate was about 100%.

0.5 parts of isopropyl alcohol was added to the reaction mixture to terminate the reaction. The resulting block copolymer [C1] had a weight average molecular weight (Mw) of 61,600 and a molecular weight distribution (Mw/Mn) of 1.05, and the ratio "wA:wB" was 70:30.

### Production of hydrogenated block copolymer [D1]

The polymer solution obtained as described above was transferred to a pressure-resistant reactor equipped with a stirrer. After the addition of 8.0 parts of a nickel catalyst supported on a diatomaceous earth carrier ("E22U" manufactured by JGC Catalysts and Chemicals Ltd., nickel content (amount of nickel supported): 60%) (hydrogenation catalyst) and 100 parts of dehydrated cyclohexane, the mixture was mixed (stirred). After replacing the atmosphere inside the reactor with hydrogen gas, hydrogen was supplied to the reactor while stirring the solution to effect a hydrogenation reaction at 190°C for 6 hours under a pressure of 4.5 MPa.

The resulting hydrogenated block copolymer [D1] had a weight average molecular weight (Mw) of 65,200 and a molecular weight distribution (Mw/Mn) of 1.06.

After filtering the reaction solution to remove the hydrogenation catalyst, 1.0 part of a solution prepared by dissolving 0.1 parts of pentaerythrityl tetrakis[3-(3,5-di-t-butyl-4-hydroxyphenyl)propionate] ("SONGNOX (registered trademark) 1010" manufactured by KOYO Chemical Research Center) (phenol-based antioxidant) in xylene was added to the reaction solution, and dissolved therein.

After filtering the solution through a metal fiber filter (manufactured by Nichidai Corporation, pore size: 0.4 µm) to remove fine solids, the solvent (cyclohexane and xylene) and other volatile components were removed from the solution at 260°C under a pressure of 0.001 MPa or less using a cylindrical evaporator ("Kontro" manufactured by Hitachi Ltd.). The molten polymer was filtered at 260°C using a polymer filter (manufactured by Fuji Filter Mfg. Co., Ltd.) provided with a stainless steel sintered filter (pore size: 5 µm) connected to the evaporator, extruded from a die in the shape of a strand, cooled, and cut using a pelletizer to obtain 95 parts of pellets of the hydrogenated block copolymer [D1].

The pellets of the hydrogenated block copolymer [D1] had a weight average molecular weight (Mw) of 64,600 and a molecular weight distribution (Mw/Mn) of 1.11, and the hydrogenation ratio was about 100%.

### Reference Example 2

### Hydrogenated block copolymer [D2]

### Production of block copolymer [C2]

A polymerization reaction was effected and terminated in the same manner as in Reference Example 1, except that 28.0 parts of styrene, 9.0 parts of isoprene, 26.0 parts of styrene, 9.0 parts of isoprene, and 28.0 parts of styrene were sequentially added, and the 15 wt% solution of n-butyllithium in cyclohexane was used in a ratio of 0.58 parts.

The resulting block copolymer [C2] had a weight average molecular weight (Mw) of 76,200 and a molecular weight distribution (Mw/Mn) of 1.07, and the ratio "wA:wB" was 82:18.

### Production of hydrogenated block copolymer [D2]

The polymer solution obtained as described above was subjected to a hydrogenation reaction in the same manner as in Reference Example 1.

The resulting hydrogenated block copolymer [D2] had a weight average molecular weight (Mw) of 80,800 and a molecular weight distribution (Mw/Mn) of 1.08.

After completion of the hydrogenation reaction, an antioxidant was added to the reaction solution in the same manner as in Reference Example 1, followed by concentration and drying to obtain 96 parts of pellets of the hydrogenated block copolymer [D2].

The pellets of the hydrogenated block copolymer [D2] had a weight average molecular weight (Mw) of 80,000 and a molecular weight distribution (Mw/Mn) of 1.13, and the hydrogenation ratio was 99.5%.

### Reference Example 3

### Hydrogenated block copolymer [D3]

### Production of block copolymer [C3]

A polymerization reaction was effected and terminated in the same manner as in Reference Example 1, except that 25.0 parts of styrene, 50.0 parts of isoprene, and 25.0 parts of styrene were sequentially added, and the 15 wt% solution of n-butyllithium in cyclohexane was used in a ratio of 0.78 parts.

The resulting block copolymer [C3] had a weight average molecular weight (Mw) of 53,200 and a molecular weight distribution (Mw/Mn) of 1.04, and the ratio "wA:wB" was 50:50.

### Production of hydrogenated block copolymer [D3]

The polymer solution obtained as described above was subjected to a hydrogenation reaction in the same manner as in Reference Example 1.

The resulting hydrogenated block copolymer [D3] had a weight average molecular weight (Mw) of 56,400 and a molecular weight distribution (Mw/Mn) of 1.05.

After completion of the hydrogenation reaction, an antioxidant was added to the reaction solution in the same manner as in Reference Example 1, followed by concentration and drying to obtain 95 parts of pellets of the hydrogenated block copolymer [D3].

The pellets of the hydrogenated block copolymer [D3] had a weight average molecular weight (Mw) of 55,800 and a molecular weight distribution (Mw/Mn) of 1.12, and the hydrogenation ratio was 99.5%.

### Reference Example 4

### Hydrogenated block copolymer [D4]

### Production of block copolymer [C4]

A polymerization reaction was effected and terminated in the same manner as in Reference Example 1, except that 45.0 parts of styrene, 10.0 parts of isoprene, and 45.0 parts of styrene were sequentially added, and the 15 wt% solution of n-butyllithium in cyclohexane was used in a ratio of 0.58 parts.

The resulting block copolymer [C4] had a weight average molecular weight (Mw) of 77,000 and a molecular weight distribution (Mw/Mn) of 1.05, and the ratio "wA:wB" was 90:10.

### Production of hydrogenated block copolymer [D4]

The polymer solution obtained as described above was subjected to a hydrogenation reaction in the same manner as in Reference Example 1.

The resulting hydrogenated block copolymer [D4] had a weight average molecular weight (Mw) of 81,700 and a molecular weight distribution (Mw/Mn) of 1.06.

After completion of the hydrogenation reaction, an antioxidant was added to the reaction solution in the same manner as in Reference Example 1, followed by concentration and drying to obtain 92 parts of pellets of the hydrogenated block copolymer [D4].

The pellets of the hydrogenated block copolymer [D4] had a weight average molecular weight (Mw) of 80,900 and a molecular weight distribution (Mw/Mn) of 1.18, and the hydrogenation ratio was about 100%.

### Reference Example 5

### Hydrogenated block copolymer [D5]

### Production of block copolymer [C5]

A polymerization reaction was effected and terminated in the same manner as in Reference Example 1, except that 15.0 parts of styrene, 70.0 parts of isoprene, and 15.0 parts of styrene were sequentially added.

The resulting block copolymer [C5] had a weight average molecular weight (Mw) of 58,800 and a molecular weight distribution (Mw/Mn) of 1.04, and the ratio "wA:wB" was 30:70.

### Production of hydrogenated block copolymer [D5]

The polymer solution obtained as described above was subjected to a hydrogenation reaction in the same manner as in Reference Example 1.

The resulting hydrogenated block copolymer [D5] had a weight average molecular weight (Mw) of 62,200 and a molecular weight distribution (Mw/Mn) of 1.05.

After completion of the hydrogenation reaction, an antioxidant was added to the reaction solution in the same manner as in Reference Example 1, followed by concentration and drying to obtain 90 parts of pellets of the hydrogenated block copolymer [D5].

The pellets of the hydrogenated block copolymer [D5] had a weight average molecular weight (Mw) of 61,600 and a molecular weight distribution (Mw/Mn) of 1.17, and the hydrogenation ratio was about 100%.

### Reference Example 6: Acrylic-based pressure-sensitive adhesive [E1]

A reactor equipped with a stirrer in which the internal atmosphere had been sufficiently replaced by nitrogen, was charged with 150 parts of ethyl acetate, 40.0 parts of isobornyl acrylate, 58.0 parts of 2-ethylhexyl acrylate, 2.0 parts of 2-hydroxyethyl acrylate, and 0.1 parts of 2,2'-azobisisobutyronitrile (polymerization initiator), and a polymerization reaction was effected at 55°C for 10 hours. 83 parts of ethyl acetate was added to the resulting reaction mixture to obtain a solution (polymer concentration: 30 wt%) including an acrylic-based polymer having a weight average molecular weight (Mw) of 820,000.

0.5 parts of trimethylolpropanetolylene diisocyanate ("CORONATE (registered trademark) L" manufactured by Nippon Polyurethane Industry Co., Ltd.) was added to the resulting solution to prepare a solution including an acrylic-based pressure-sensitive adhesive [E1].

### Reference Example 7: Acrylic-based pressure-sensitive adhesive [E2]

A solution (polymer concentration: 30 wt%) including an acrylic-based polymer having a weight average molecular weight (Mw) of 700,000 was obtained in the same manner as in Reference Example 6, except that 79.0 parts of n-butyl acrylate, 19.0 parts of methyl acrylate, and 2.0 parts of 2-hydroxyethyl acrylate were used as the (meth)acrylate-based monomers.

0.5 parts of trimethylolpropanetolylene diisocyanate was added to the resulting solution to prepare a solution including an acrylic-based pressure-sensitive adhesive [E2].

### Example 1

The hydrogenated block copolymer [D1] obtained in Reference Example 1 was extruded using a T-die film-forming device (width of T-die: 300 mm) (provided with a single-screw extruder having a screw with a diameter of 20 mm) and a sheet take-up device provided with a casting roll (resin temperature: 230°C, T-die temperature: 230°C, casting roll temperature: 70°C) to obtain a film [D1F] having a thickness of 50 µm and a width of 230 mm.

The solution including the acrylic-based pressure-sensitive adhesive [E1] prepared in Reference Example 6 was applied to one side of the film [D1F] using a bar coater so that the thickness after drying was about 25 µm, and the applied solution was dried at 100°C for 10 minutes to form a pressure-sensitive adhesive [E1] layer.

After bonding a PET film having a thickness of 40 µm (that had been subjected to a release treatment) to the pressure-sensitive adhesive [E1] layer, the solution including the acrylic-based pressure-sensitive adhesive [E1] prepared in Reference Example 6 was applied to the other side of the film [D1F] in the same manner as described above so that the thickness after drying was about 25 µm, and the applied solution was dried at 100°C for 10 minutes to obtain a transparent pressure-sensitive adhesive sheet [E1/D1F/E1] in which the pressure-sensitive adhesive [E1] layer was formed on each side of the film [D1F].

The transparency, the in-plane retardation (Re), the adhesion, and the reworkability of the transparent pressure-sensitive adhesive sheet were evaluated using the film (melt-extruded film) [D1F] and the transparent pressure-sensitive adhesive sheet [E1/D1F/E1].

The evaluation results are listed in Table 1.

### Example 2

A transparent pressure-sensitive adhesive sheet [E2/D1F/E2] in which a pressure-sensitive adhesive [E2] layer (thickness: 25 µm) was formed on each side of the film [D1F], was obtained in the same manner as in Example 1, except that each side of the film [D1F] formed of the hydrogenated block copolymer [D1] that was prepared in Example 1 was subjected to a corona discharge treatment at a feed rate of 4 m/min using a corona treatment device (manufactured by Kasuga Denki, Inc., output: 300 W, electrode length: 240 mm, workpiece-electrode distance: 3.0 mm), and the solution including the acrylic-based pressure-sensitive adhesive [E2] prepared in Reference Example 7 was used.

The transparency, the in-plane retardation (Re), the adhesion, and the reworkability of the transparent pressure-sensitive adhesive sheet were evaluated using the transparent pressure-sensitive adhesive sheet [E2/D1F/E2]. The evaluation results are listed in Table 1.

### Example 3

A film [D2F] having a thickness of 50 µm and a width of 230 mm was prepared in the same manner as in Example 1, except that the hydrogenated block copolymer [D2] obtained in Reference Example 2 was used, the resin temperature was set to 240°C, the T-die temperature was set to 240°C, and the casting roll temperature was set to 80°C.

The resulting film [D2F] was subjected to a corona discharge treatment in the same manner as in Example 2. A transparent pressure-sensitive adhesive sheet [E2/D2F/E2] in which the pressure-sensitive adhesive [E2] layer (thickness: 25 µm) was formed on each side of the film [D2F], was obtained in the same manner as in Example 1, except that the film [D2F] subjected to the corona discharge treatment was used, and the solution including the acrylic-based pressure-sensitive adhesive [E2] prepared in Reference Example 7 was used.

The transparency, the in-plane retardation (Re), the adhesion, and the reworkability of the transparent pressure-sensitive adhesive sheet were evaluated using the transparent pressure-sensitive adhesive sheet [E2/D2F/E2]. The evaluation results are listed in Table 1.

### Example 4

A film [D3F] having a thickness of 50 µm and a width of 230 mm was prepared in the same manner as in Example 1, except that the hydrogenated block copolymer [D3] obtained in Reference Example 3 was used, the resin temperature was set to 220°C, the T-die temperature was set to 220°C, and the casting roll temperature was set to 50°C.

A transparent pressure-sensitive adhesive sheet [E1/D3F/E1] in which the pressure-sensitive adhesive [E1] layer (thickness: 25 µm) was formed on each side of the film [D3F], was obtained in the same manner as in Example 1, except that the film [D3F] obtained as described above was used, and the solution including the acrylic-based pressure-sensitive adhesive [E1] prepared in Reference Example 6 was used. The transparency, the in-plane retardation (Re), the adhesion, and the reworkability of the transparent pressure-sensitive adhesive sheet were evaluated using the transparent pressure-sensitive adhesive sheet [E1/D3F/E1]. The evaluation results are listed in Table 1.

### Example 5

The film [D3F] obtained in Example 4 was subjected to a corona discharge treatment in the same manner as in Example 2. A transparent pressure-sensitive adhesive sheet [E2/D3F/E2] in which the pressure-sensitive adhesive [E2] layer (thickness: 25 µm) was formed on each side of the film [D3F], was obtained in the same manner as in Example 1, except that the film [D3F] subjected to the corona discharge treatment was used, and the solution including the acrylic-based pressure-sensitive adhesive [E2] prepared in Reference Example 7 was used.

The transparency, the in-plane retardation (Re), the adhesion, and the reworkability of the transparent pressure-sensitive adhesive sheet were evaluated using the transparent pressure-sensitive adhesive sheet [E2/D3F/E2]. The evaluation results are listed in Table 1.

### Comparative Example 1

A film [D4F] having a thickness of 50 µm and a width of 230 mm was prepared in the same manner as in Example 1, except that the hydrogenated block copolymer [D4] obtained in Reference Example 4 was used, the resin temperature was set to 250°C, the T-die temperature was set to 250°C, and the casting roll temperature was set to 80°C.

A transparent pressure-sensitive adhesive sheet [E1/D4F/E1] in which the pressure-sensitive adhesive [E1] layer (thickness: 25 µm) was formed on each side of the film [D4F], was obtained in the same manner as in Example 1, except that the film [D4F] obtained as described above was used, and the solution including the acrylic-based pressure-sensitive adhesive [E1] prepared in Reference Example 6 was used. The transparency, the in-plane retardation (Re), the adhesion, and the reworkability of the transparent pressure-sensitive adhesive sheet were evaluated using the transparent pressure-sensitive adhesive sheet [E1/D4F/E1]. The evaluation results are listed in Table 1.

### Comparative Example 2

The film [D4F] formed of the hydrogenated block copolymer [D4] that was prepared in Comparative Example 1 was subjected to a corona discharge treatment in the same manner as in Example 2. A transparent pressure-sensitive adhesive sheet [E2/D4F/E2] in which the pressure-sensitive adhesive [E2] layer (thickness: 25 µm) was formed on each side of the film [D4F], was obtained in the same manner as in Example 1, except that the film [D4F] subjected to the corona discharge treatment was used, and the solution including the acrylic-based pressure-sensitive adhesive [E2] prepared in Reference Example 7 was used. The transparency, the in-plane retardation (Re), the adhesion, and the reworkability of the transparent pressure-sensitive adhesive sheet were evaluated using the transparent pressure-sensitive adhesive sheet [E2/D4F/E2]. The evaluation results are listed in Table 1.

### Comparative Example 3

A film [D5F] having a thickness of 50 µm and a width of 230 mm was prepared in the same manner as in Example 1, except that the hydrogenated block copolymer [D5] obtained in Reference Example 5 was used, the resin temperature was set to 200°C, the T-die temperature was set to 200°C, and the casting roll temperature was set to 30°C.

A transparent pressure-sensitive adhesive sheet [E1/D5F/E1] in which the pressure-sensitive adhesive [E1] layer (thickness: 25 µm) was formed on each side of the film [D5F], was obtained in the same manner as in Example 1, except that the film [D5F] obtained as described above was used, and the solution including the acrylic-based pressure-sensitive adhesive [E1] prepared in Reference Example 6 was used. The transparency, the in-plane retardation (Re), the adhesion, and the reworkability of the transparent pressure-sensitive adhesive sheet were evaluated using the transparent pressure-sensitive adhesive sheet [E1/D5F/E1]. The evaluation results are listed in Table 1.

### Comparative Example 4

The film [D5F] formed of the hydrogenated block copolymer [D5] that was prepared in Comparative Example 3 was subjected to a corona discharge treatment in the same manner as in Example 2. A transparent pressure-sensitive adhesive sheet [E2/D5F/E2] in which the pressure-sensitive adhesive [E2] layer (thickness: 25 µm) was formed on each side of the film [D5F], was obtained in the same manner as in Example 1, except that the film [D5F] subjected to the corona discharge treatment was used, and the solution including the acrylic-based pressure-sensitive adhesive [E2] prepared in Reference Example 7 was used. The transparency, the in-plane retardation (Re), the adhesion, and the reworkability of the transparent pressure-sensitive adhesive sheet were evaluated using the transparent pressure-sensitive adhesive sheet [E2/D5F/E2]. The evaluation results are listed in Table 1.

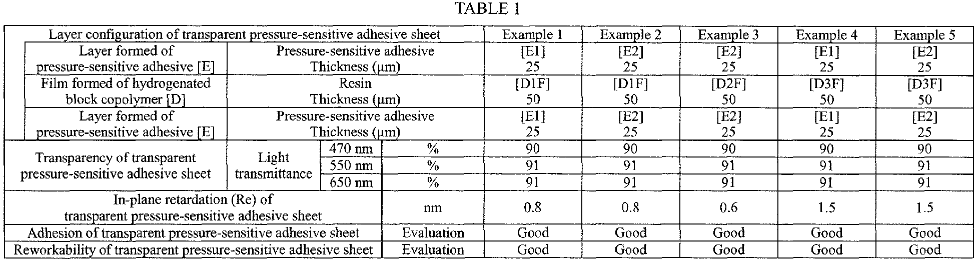

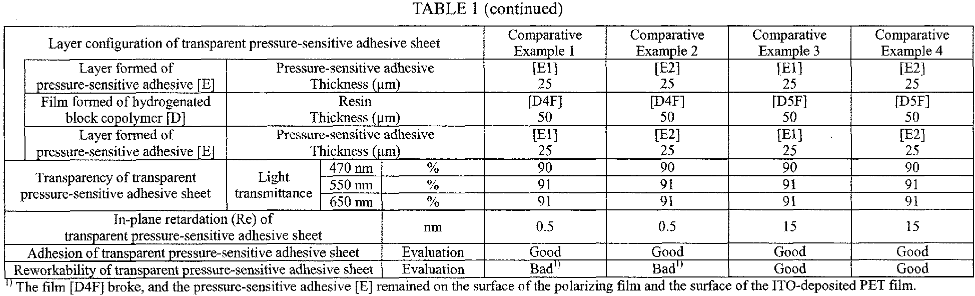

### Example 6

A film [D1F2] having a thickness of 30 µm and a width of 230 mm was prepared in the same manner as in Example 1 using the hydrogenated block copolymer [D1] obtained in Reference Example 1. A pressure-sensitive adhesive [E1] layer having a thickness of 25 µm was formed on each side of the film [D1F2] in the same manner as in Example 1 to obtain a transparent pressure-sensitive adhesive sheet [E1/D1F2/E1].

The transparency, the in-plane retardation (Re), the adhesion, and the reworkability of the transparent pressure-sensitive adhesive sheet were evaluated using the film (melt-extruded film) [D1F2] and the transparent pressure-sensitive adhesive sheet [E1/D1F2/E1]. The in-plane retardation (Re) was 0.7 nm, the adhesion was evaluated as "Good", and the reworkability was evaluated as "Good".

The following were confirmed from the results obtained in the examples and the comparative examples.

The transparent pressure-sensitive adhesive sheets according to Examples 1 to 6 had high light transmittance in the visible region and small in-plane retardation (i.e., exhibited excellent optical properties), exhibited excellent adhesion to a PET film and a TAC film, and exhibited excellent reworkability.

When the transparent pressure-sensitive adhesive sheets produced using the film [D4F] formed of the hydrogenated block copolymer [D4] in which the conjugated diene content was lower than the conjugated diene content that falls within the scope of the invention (Comparative Examples 1 and 2) were used, the film [D4F] broke when the transparent pressure-sensitive adhesive sheet was removed from the PET film and the polarizing film (that was provided with the TAC film as a protective layer), and it was difficult to remove the pressure-sensitive adhesive [E] from the surface of the PET film and the surface of the TAC film (i.e., the transparent pressure-sensitive adhesive sheet exhibited poor reworkability). The transparent pressure-sensitive adhesive sheets produced using the film [D5F] formed of the hydrogenated block copolymer [D5] in which the conjugated diene content was higher than the conjugated diene content that falls within the scope of the invention (Comparative Examples 3 and 4), had too large an in-plane retardation, and were not suitable as a transparent pressure-sensitive adhesive sheet for optical applications.

### INDUSTRIAL APPLICABILITY

The transparent pressure-sensitive adhesive sheet according to the embodiments of the invention exhibits excellent transparency, low birefringence, sufficient adhesion, and sufficient reworkability, and is suitable as a transparent pressure-sensitive adhesive sheet for optical applications that is used to bond a touch panel and a polarizing film, or bond a touch panel and cover glass, for example.

## Claims

1. A transparent pressure-sensitive adhesive sheet comprising a film that is formed of a hydrogenated triblock copolymer [D], and a layer that is formed of a transparent pressure-sensitive adhesive [E] being selected from at least one selected from the group consisting of an acrylic-based pressure-sensitive adhesive, a silicone-based pressure-sensitive adhesive, a polyester-based pressure-sensitive adhesive, a rubber-based pressure-sensitive adhesive, a polyurethane-based pressure-sensitive adhesive and an isobutylene-maleic anhydride copolymer-based pressure-sensitive adhesive, the layer being formed on each side of the film,
the hydrogenated triblock copolymer [D] being obtained by hydrogenating 90% or more of unsaturated bonds of a triblock copolymer [C] in which a polymer block [A] is bonded to each end of a polymer block [B], the polymer block [A] comprising a repeating unit derived from an aromatic vinyl compound as a main component, the polymer block [B] comprising a repeating unit derived from a linear conjugated diene compound as a main component, and a ratio (wA:wB) of a total weight fraction wA of the polymer block [A] in the triblock copolymer [C] to a total weight fraction wB of the polymer block [B] in the triblock copolymer [C] being 40:60 to 85:15, and
wherein the pressure-sensitive adhesive sheet having a light transmittance at wavelengths of 470 nm, 550 nm and 650 nm measured using a UV spectrophotometer is 90% or more.

2. The transparent pressure-sensitive adhesive sheet according to claim 1, wherein the layer that is formed of the transparent pressure-sensitive adhesive [E] is formed of an acrylic-based pressure-sensitive adhesive that includes a (meth)acrylate-based polymer obtained by polymerizing a monomer component that includes an alkyl (meth)acrylate including an alkyl group having 4 to 18 carbon atoms in a ratio of 30 wt% or more.

## Patentansprüche

1. Eine transparente Haftklebefolie umfassend eine Folie, die gebildet ist aus einem hydrierten Triblockcopolymer [D], und einer Schicht, die gebildet ist aus einem transparenten Haftklebstoff [E] ausgewählt aus mindestens einem ausgewählt aus der Gruppe bestehend aus einem Acryl-basierten Haftklebstoff, einem Silikonbasierten Haftklebstoff, einem Polyester-basierten Haftklebstoff, einem Kautschukbasierten Haftklebstoff, einem Polyurethan-basierten Haftklebstoff und einem Isobutylen-Maleinsäureanhydridcopolymer-basierten Haftklebstoff, wobei die Schicht auf beiden Seiten der Folie ausgebildet ist,
das hydrierte Triblockcopolymer [D] erhalten wird durch Hydrieren von 90% oder mehr der ungesättigten Bindungen eines Triblockcopolymers [C] in welchem ein Block [A] gebunden ist an jedes Ende eines Polymerblocks [B], der Polymerblock [A] umfassend eine Wiederholeinheit abgeleitet von einer aromatischen Vinylverbindung als Hauptkomponente, der Polymerblock [B] umfassend eine Wiederholeinheit abgeleitet von einer linear konjugierten Dienverbindung als eine Hauptkomponente, und ein Verhältnis (wA:wB) eines Gesamtgewichtanteils wA des Polymerblocks [A] in dem Triblockcopolymer [C] zu einem Gesamtgewichtsanteil wB des Polymerblocks [B] in dem Triblockcopolymer [C] von 40:60 bis 85:15 liegt, und
wobei die Haftklebefolie eine Lichtdurchlässigkeit bei Wellenlängen von 470 nm, 550 nm und 650 nm gemessen unter Verwendung eines UV-Spectrophotometers bei 90% oder mehr liegt.

2. Die transparente Haftklebefolie gemäß Anspruch 1, wobei die Schicht aus dem transparenten Haftklebstoff [E] aus einem Acryl-basierten Haftklebstoff gemacht ist, welcher ein (Meth)acrylat-basiertes Polymer umfasst, das erhalten wird durch Polymerisierung einer Monomerkomponente welche ein Alkyl(meth)acrylat umfasst, umfassend eine Alkylgruppe mit 4 bis 18 Kohlenstoffatomen in einem Verhältnis von 30 Gew.- % oder mehr.

## Revendications

1. Feuille adhésive transparente sensible à la pression comportant un film qui est formé d'un copolymère tribloc hydrogéné [D], et une couche qui est formée d'un adhésif sensible à la pression transparent [E] étant choisi parmi au moins un choisi parmi le groupe constitué d'un adhésif sensible à la pression à base d'acrylique, d'un adhésif sensible à la pression à base de silicone, d'un adhésif sensible à la pression à base de polyester, d'un adhésif sensible à la pression à base de caoutchouc, d'un adhésif sensible à la pression à base de polyuréthane et d'un adhésif sensible à la pression à base de copolymère d'isobutylène-anhydride maléique, la couche étant formée sur chaque face du film,
le copolymère tribloc hydrogéné [D] étant obtenu en hydrogénant 90 % ou plus de liaisons insaturées d'un copolymère tribloc [C] dans lequel un bloc de polymère [A] est lié à chaque extrémité d'un bloc de polymère [B], le bloc de polymère [A] comportant une unité répétée dérivée d'un composé vinylique aromatique en tant que composant principal, le bloc de polymère [B] comportant une unité répétée dérivée d'un composé diène conjugué linéaire en tant que composant principal, et un rapport (wA:wB) d'une fraction de poids total wA du bloc de polymère [A] dans le copolymère tribloc [C] sur une fraction de poids total wB du bloc de polymère [B] dans le copolymère tribloc [C] étant de 40:60 à 85:15, et
dans laquelle la feuille adhésive sensible à la pression ayant une transmittance de lumière à des longueurs d'onde de 470 nm, 550 nm et 650 nm mesurée en utilisant un spectrophotomètre UV est de 90 % ou plus.

2. Feuille adhésive transparente sensible à la pression selon la revendication 1, dans laquelle la couche qui est formée de l'adhésif sensible à la pression transparent [E] est formée d'un adhésif sensible à la pression à base d'acrylique qui inclut un polymère à base de (méth)acrylate obtenu en polymérisant un composant monomère qui inclut un (méth)acrylate d'alkyle incluant un groupe alkyle possédant 4 à 18 atomes de carbone dans un rapport de 30 % en poids ou plus.
